# EUROPEAN PATENT APPLICATION

(11) **EP 4 459 975 A1**
(43) Date of publication of application: **06.11.2024**
(21) Application number: 22914911.7
(22) Date of filing: 28.12.2022
(51) Int. Cl.: H04N 5/14, H04N 23/00

(54) **IMAGE PROCESSING CIRCUIT AND DATA TRANSMISSION METHOD**

(30) Priority: 28.12.2021 CN 202111627015
(71) Applicant: VIVO MOBILE COMMUNICATION CO., LTD., Dongguan, Guangdong 523863 (CN)
(72) Inventor: DONG, Zhixiang, Dongguan, Guangdong 523863 (CN)
(74) Representative: Conti, Marco
(86) International application number: PCT/CN2022/142802
(87) International publication number: WO 2023/125659

(57) **Abstract**

This application provides an image processing circuit and a data transmission method. The image processing circuit includes: an image sensor; a processor chip, where the processor chip is communicatively connected to the image sensor, and the processor chip includes a first camera serial interface and a first bus interface; and an image processing chip, where the image processing chip includes a second camera serial interface and a second bus interface, the second camera serial interface is connected to the first camera serial interface, and the second bus interface is connected to the first bus interface. The image processing chip and the processor chip transmit image data through the second camera serial interface and the first camera serial interface, and transmit control instructions through the second bus interface and the first bus interface.

## Description

### CROSS-REFERENCE TO RELATED APPLICATIONS

This application claims priority to Chinese Patent Application No. 202111627015.7, filed in China on December 28, 2021, which is incorporated herein by reference in its entirety.

### TECHNICAL FIELD

This application relates to the field of communication technologies, and in particular, to an image processing circuit and a data transmission method.

### BACKGROUND

With the popularity of electronic devices, functions of the electronic devices become increasingly advanced. An electronic device has functions such as photography and videography. A higher requirement for an imaging effect of the electronic device is accompanied with a higher resolution and pixel requirement for an image captured by the electronic device. Currently, an image signal processor (Image Signal Processor, ISP) is used to process image data, but an effect of image data processing is poor.

### SUMMARY

Embodiments of this application provide an image processing circuit and a data transmission method, to solve an existing problem of a poor effect of image data processing. To solve the foregoing technical problem, the present invention is implemented as follows.

According to a first aspect, an embodiment of this application provides an image processing circuit, and the image processing circuit includes:
an image sensor;
a processor chip, where the processor chip is communicatively connected to the image sensor, and the processor chip includes a first camera serial interface and a first bus interface; and
an image processing chip, where the image processing chip includes a second camera serial interface and a second bus interface, the second camera serial interface is connected to the first camera serial interface, and the second bus interface is connected to the first bus interface.

The image processing chip and the processor chip transmit image data through the second camera serial interface and the first camera serial interface, and transmit control instructions through the second bus interface and the first bus interface.

According to a second aspect, an embodiment of this application provides an electronic device, including the image processing circuit according to the first aspect.

According to a third aspect, an embodiment of this application provides a data transmission method, performed by an image processing chip. The image processing chip is the image processing chip in the image processing circuit according to the first aspect. The method includes:
receiving, through the second bus interface, a stream-on instruction sent by the processor chip;
in response to the stream-on instruction, receiving first image data sent by the processor chip, and performing image processing on the first image data to obtain second image data; and
sending the second image data to the processor chip through the second camera serial interface.

According to a fourth aspect, an embodiment of this application provides a data transmission method, performed by a processor chip. The processor chip is the processor chip in the image processing circuit according to the first aspect. The method includes:
sending a stream-on instruction to the image processing chip through the first bus interface in a case that a first instruction triggered by a first operation performed by a user is received;
sending first image data to the image processing chip, so that the image processing chip performs image processing on the first image data to obtain second image data; and
receiving, through the first camera serial interface, the second image data sent by the image processing chip.

According to a fifth aspect, an embodiment of this application provides an image processing chip, and the image processing chip includes:
a first receiving module, configured to receive, through a second bus interface, a stream-on instruction sent by a processor chip;
a second receiving module, configured to: in response to the stream-on instruction, receive first image data sent by the processor chip, and perform image processing on the first image data to obtain second image data; and
a sending module, configured to send the second image data to the processor chip through a second camera serial interface.

According to a sixth aspect, an embodiment of this application provides a processor chip, and the processor chip includes:
a first sending module, configured to send a stream-on instruction to an image processing chip through a first bus interface in a case that a first instruction triggered by a first operation performed by a user is received;
a second sending module, configured to send first image data to the image processing chip, so that the image processing chip performs image processing on the first image data to obtain second image data; and
a receiving module, configured to receive, through a first camera serial interface, the second image data sent by the image processing chip.

According to a seventh aspect, an embodiment of this application provides an electronic device. The electronic device includes a processor and a memory, and the memory stores a program or instructions capable of running on the processor. When the program or the instructions are executed by the processor, the steps of the data transmission method according to the third aspect are implemented, or when the program or the instructions are executed by the processor, the steps of the data transmission method according to the fourth aspect are implemented.

According to an eighth aspect, an embodiment of this application provides a readable storage medium. The readable storage medium stores a program or instructions. When the program or the instructions are executed by a processor, the steps of the data transmission method according to the third aspect are implemented, or when the program or the instructions are executed by a processor, the steps of the data transmission method according to the fourth aspect are implemented.

According to a ninth aspect, an embodiment of this application provides a chip. The chip includes a processor and a communication interface. The communication interface is coupled to the processor, and the processor is configured to run a program or instructions, to implement the method according to the third aspect or the fourth aspect.

According to a tenth aspect, an embodiment of this application provides a computer program product. The computer program product is stored in a storage medium, and the computer program product is executed by at least one processor, to implement the method according to the third aspect or the fourth aspect.

According to an eleventh aspect, an embodiment of this application provides an electronic device, configured to perform the method according to the third aspect or the fourth aspect.

In embodiments of this application, the image processing circuit includes the image sensor, the processor chip, and the image processing chip. The image processing chip includes the second camera serial interface and the second bus interface, the second camera serial interface is connected to the first camera serial interface, and the second bus interface is connected to the first bus interface. In this way, the image processing chip separated from the processor chip is used to process image data, to reduce impact of a hardware limitation of the processor chip on an image processing capability, and improve an image data processing capability. In addition, the image processing chip and the processor chip transmit image data through the second camera serial interface and the first camera serial interface, and transmit control instructions through the second bus interface and the first bus interface. There is no need to add a new hardware interface to send image data in the image processing chip back to the processor chip, reducing difficulty in hardware design.

### BRIEF DESCRIPTION OF DRAWINGS

FIG. 1 is a schematic diagram of a structure of an image processing circuit according to an embodiment of this application;
FIG. 2 is a flowchart 1 of a data transmission method according to an embodiment of this application;
FIG. 3 is a flowchart 2 of a data transmission method according to an embodiment of this application;
FIG. 4 is a schematic diagram of a structure of an image processing chip according to an embodiment of this application;
FIG. 5 is a schematic diagram 1 of a structure of a processor chip according to an embodiment of this application;
FIG. 6 is a schematic diagram 2 of a structure of a processor chip according to an embodiment of this application;
FIG. 7 is a schematic diagram 3 of a structure of a processor chip according to an embodiment of this application;
FIG. 8 is a schematic diagram 4 of a structure of a processor chip according to an embodiment of this application;
FIG. 9 is a schematic diagram 5 of a structure of a processor chip according to an embodiment of this application;
FIG. 10 is a schematic diagram 1 of a structure of an electronic device according to an embodiment of this application; and
FIG. 11 is a schematic diagram 2 of a structure of an electronic device according to an embodiment of this application.

### DESCRIPTION OF EMBODIMENTS

The following clearly describes technical solutions in embodiments of this application with reference to accompanying drawings in embodiments of this application. Apparently, the described embodiments are some but not all of embodiments of this application. All other embodiments obtained by a person of ordinary skill in the art based on embodiments of this application shall fall within the protection scope of this application.

The terms "first", "second", and the like in this specification and claims of this application are used to distinguish between similar objects instead of describing a specific order or sequence. It should be understood that terms used in such a way are interchangeable in proper circumstances, so that embodiments of this application can be implemented in an order other than the order illustrated or described herein. Objects classified by "first", "second", and the like are usually of a same type, and the quantity of objects is not limited. For example, there may be one or more first objects. In addition, in this specification and the claims, "and/or" indicates at least one of connected objects, and a character "/" generally indicates an "or" relationship between associated objects.

The following describes in detail an image processing circuit and a data transmission method provided in embodiments of this application through specific embodiments and application scenarios thereof with reference to the accompanying drawings.

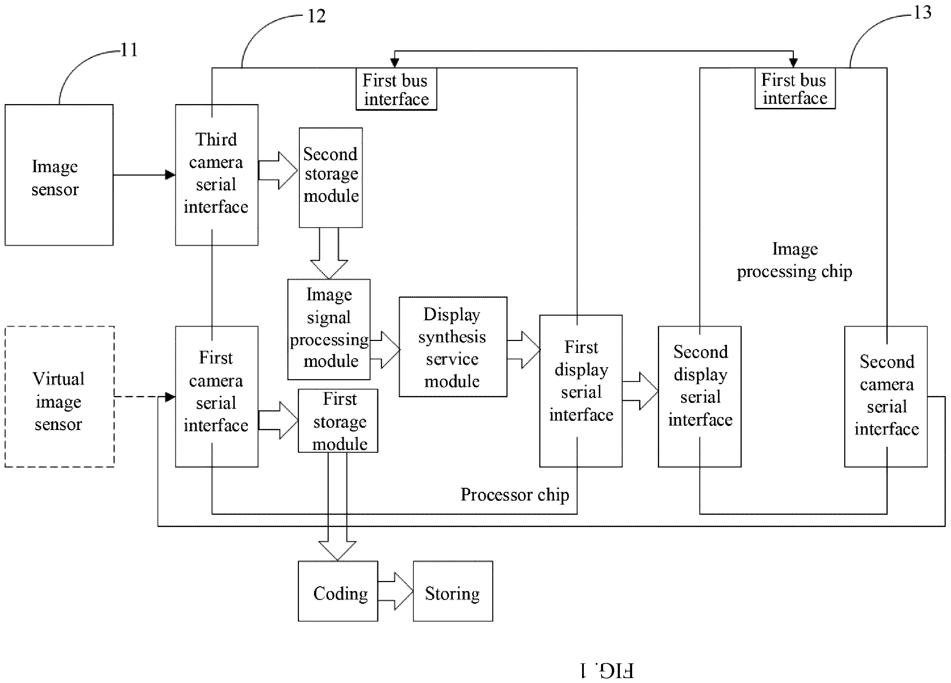

FIG. 1 is a schematic diagram of a structure of an image processing circuit according to an embodiment of this application. As shown in FIG. 1, the image processing circuit includes:
an image sensor 11;
a processor chip 12, where the processor chip 12 is communicatively connected to the image sensor 11, and the processor chip 12 includes a first camera serial interface and a first bus interface; and
an image processing chip 13, where the image processing chip 13 includes a second camera serial interface and a second bus interface, the second camera serial interface is connected to the first camera serial interface, and the second bus interface is connected to the first bus interface.

The image processing chip 13 and the processor chip 12 transmit image data through the second camera serial interface and the first camera serial interface, and transmit control instructions through the second bus interface and the first bus interface.

The processor chip 12 may be connected to the image sensor 11 through a third camera serial interface, and the third camera serial interface may be a camera serial interface (Camera Serial Interface, CSI) of a mobile industry processor interface (Mobile Industry Processor Interface, MIPI) module. For example, as shown in FIG. 1, the third camera serial interface may be a MIPI CSI RX0 interface, and the processor chip 12 may receive, through the MIPI CSI RX0 interface, image data sent by the image sensor 11. The first camera serial interface may be a CSI of a MIPI module. For example, as shown in FIG. 1, the first camera serial interface may be a MIPI CSI RX1 interface, and the processor chip 12 may receive, through the MIPI CSI RX1 interface, image data sent by the image processing chip 13. The first bus interface may be an inter-integrated circuit (Inter-Integrated Circuit, I2C) bus interface or a serial peripheral interface (Serial Peripheral Interface, SPI) bus interface.

In addition, the second camera serial interface may be a CSI of a MIPI module. For example, as shown in FIG. 1, the second camera serial interface may be a MIPI CSI TX1 interface, and the image processing chip 13 may send image data to the processor chip 12 through the MIPI CSI TX1 interface. The second bus interface may be an I2C bus interface or an SPI bus interface.

It should be noted that, the image processing circuit may be a circuit in an electronic device. Through the control instruction, operating synchronization between the processor chip 12 and the image processing chip 13 can be implemented when the electronic device is used for photography. The control instruction may include a stream-on instruction and/or a stream-off instruction, or may further include another control instruction. After receiving a stream-on instruction sent by the processor chip 12, the image processing chip 13 may receive first image data sent by the processor chip 12, and perform image processing on the first image data to obtain second image data. The processor chip 12 receives, through the first camera serial interface, the second image data sent by the image processing chip 13. After receiving a stream-off instruction sent by the processor chip 12, the image processing chip 13 may stop sending the second image data to the processor chip 12.

In a specific implementation, as shown in FIG. 1, after an image signal processing (Image Signal Processing, ISP) module of the processor chip 12 performs image processing on an image output by the image sensor 11, a current user interface (User Interface, UI) and an image in a camera preview interface are separated from each other in a display synthesis service (surfacefliger) module of a software architecture (framework), and are separately transmitted to the image processing chip 13 through a first display serial interface of the processor chip 12 by using a standard MIPI display serial interface (Display Serial Interface, DSI) protocol. The first display serial interface may be a DSI of a MIPI module, for example, the first display serial interface may be a MIPI DSI TX0. The image processing chip 13 performs image processing on the image transmitted by the processor chip 12, and sends an image obtained after image processing to the MIPI CSI RX1 of the processor chip 12 through a MIPI CSI TX0. The processor chip 12 writes image data received by the MIPI CSI RX1 into a dynamic random access memory (Dynamic Random Access Memory, DRAM). The image data stored in the DRAM may be directly used for coding and storing of a picture or a video.

It should be noted that, in an example in which the electronic device is a mobile phone, the image processing chip 13 may provide a hardware-level image computing capability for the mobile phone, break a bottleneck of image computing power of the mobile phone, and perform targeted optimization on a real-time concurrent data processing capability, so that the mobile phone has stronger image computing power. The ISP module included in the processor chip 12 directly accesses, through an address bus and a data bus, a memory to perform image processing, but the independent image processing chip 13 cannot directly access the memory. If the processed image needs to be directly stored in the memory, the image processing chip 13 needs to be physically connected to the data bus and the address bus of the processor chip 12, which increases difficulty in hardware design and software development. In this embodiment of this application, image data is transmitted through the second camera serial interface and the first camera serial interface, control instructions are transmitted through the second bus interface and the first bus interface, and image data from the image processing chip 13 is stored into a first storage module. In this way, the image processing chip 13 can send, after completing image processing, image data to the processor chip 12 for subsequent processing, such as picture coding or video coding. In this embodiment of this application, an original camera framework of the processor chip 12 may be used, to implement more flexible software design, so that the image processing chip 13 can be conveniently integrated on each platform. This brings good photography and video recording experience to a user.

In this embodiment of this application, the image processing circuit includes the image sensor 11, the processor chip 12, and the image processing chip 13. The image processing chip 13 includes the second camera serial interface and the second bus interface, the second camera serial interface is connected to the first camera serial interface, and the second bus interface is connected to the first bus interface. In this way, the image processing chip 13 separated from the processor chip 12 is used to process image data, to reduce impact of a hardware limitation of the processor chip 12 on an image processing capability, and improve an image data processing capability. In addition, the image processing chip 13 and the processor chip 12 transmit image data through the second camera serial interface and the first camera serial interface, and transmit control instructions through the second bus interface and the first bus interface. There is no need to add a new hardware interface to send image data in the image processing chip 13 to the processor chip 12, reducing difficulty in hardware design.

Optionally, the processor chip further includes a first display serial interface, the image processing chip includes a second display serial interface, and the second display serial interface is connected to the first display serial interface.

The first display serial interface may be a DSI of a MIPI module. For example, as shown in FIG. 1, the first display serial interface may be a MIPI DSI TX0 interface, and the processor chip may send image data to the image processing chip through the MIPI DSI TX0 interface. The second display serial interface may be a DSI of a MIPI module. For example, the second display serial interface may be a MIPI DSI RX0 interface, and the image processing chip may receive, through the MIPI DSI RX0 interface, image data sent by the processor chip.

In this implementation, the processor chip further includes the first display serial interface, the image processing chip includes the second display serial interface, and the second display serial interface is connected to the first display serial interface, so that first image data in the processor chip can be transmitted, through the second display serial interface and the first display serial interface, to the image processing chip for image processing.

Optionally, the processor chip further includes an image signal processing module and a display synthesis service module, one end of the display synthesis service module is communicatively connected to the image sensor through the image signal processing module, and the other end of the display synthesis service module is connected to the first display serial interface.

The processor chip may be connected to the image sensor through a third camera serial interface, and the image signal processing module may be connected to the third camera serial interface through a second storage module. The second storage module may be a DRAM.

In this implementation, one end of the display synthesis service module is communicatively connected to the image sensor through the image signal processing module, and the other end of the display synthesis service module is connected to the first display serial interface, so that the image signal processing module can perform image signal processing on third image data sent by the image sensor to obtain fourth image data. The display synthesis service module can generate a camera preview interface corresponding to the fourth image data, and send, to the image processing chip through the first display serial interface, first image data corresponding to an image displayed in the camera preview interface.

Optionally, the processor chip further includes a first storage module, and the first camera serial interface is communicatively connected to the first storage module.

The first storage module may be a DRAM. The processor chip can directly store, into the first storage module, image data received from the image processing chip through the first camera serial interface. The image data stored in the first storage module may be directly used for picture coding or video coding.

In addition, the first storage module and the second storage module may be two different modules of a same DRAM, or the first storage module and the second storage module may be two different DRAMs. This is not limited in this embodiment.

In this implementation, the processor chip further includes the first storage module, and the first camera serial interface is communicatively connected to the first storage module, so that the processor chip can directly store, into the first storage module, image data sent by the image processing chip to the processor chip.

An embodiment of this application further provides an electronic device. The electronic device includes the image processing circuit shown in FIG. 1.

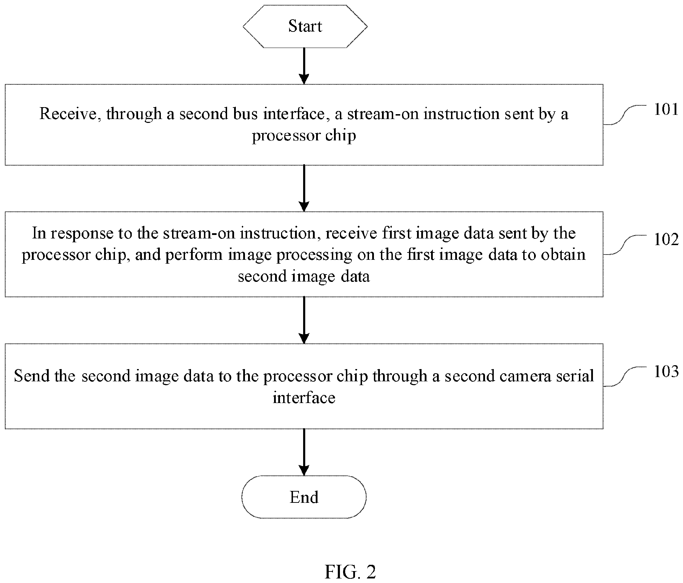

FIG. 2 is a flowchart 1 of a data transmission method according to an embodiment of this application. The method is performed by an image processing chip, and the image processing chip is the image processing chip in the image processing circuit shown in FIG. 1. As shown in FIG. 2, the method includes the following steps:
Step 101: Receive, through the second bus interface, a stream-on instruction sent by the processor chip.
Step 102: In response to the stream-on instruction, receive first image data sent by the processor chip, and perform image processing on the first image data to obtain second image data.
Step 103: Send the second image data to the processor chip through the second camera serial interface.

The processor chip may send the stream-on instruction to the image processing chip through the first bus interface in a case that a first instruction triggered by a first operation performed by a user is received. The first operation may be an operation of starting photography or video recording. For example, the first operation may be an operation of tapping a photography button or a video recording button by the user. The processor chip may receive, through the first camera serial interface, the second image data sent by the image processing chip, and may store the second image data into the first storage module.

It should be noted that, performing image processing on the first image data may be performing image enhancement processing on the first image data, for example, may be performing frame reduction processing and/or super-resolution processing on the first image data.

In addition, the image processing circuit may be a circuit in an electronic device. In a case that a camera in the electronic device is started, the image sensor may obtain third image data, and the processor chip may receive the third image data sent by the image sensor. The processor chip may perform image signal processing on the third image data through an ISP module, to obtain fourth image data, and generate a camera preview interface corresponding to the fourth image data. In a case that the user starts photography or video recording, the processor chip may send first image data corresponding to an image displayed in the camera preview interface to the image processing chip for image processing, to obtain second image data. The image processing chip may send the second image data to the processor chip through the second camera serial interface, so that image data is send back to the processor chip.

It should be noted that, the data transmission method in this embodiment of this application may be performed by a virtual image sensor in the image processing chip. The virtual image sensor can implement a camera control process of a real image sensor. Compare with the real image sensor, control of power-on/off of the virtual image sensor may be control of power-on/off of the image processing chip, and control of IO of the virtual image sensor may be control of IO of the image processing chip. The control of IO of the virtual image sensor may be performing read and write operations on a register of the image processing chip through the second bus interface. In addition, stream-on control and stream-off control of the virtual image sensor may be stream-on control and stream-off control of the second camera serial interface of the image processing chip.

In an implementation, when the user taps to take a photograph or record a video, the processor chip may deliver a stream-on (streamon) instruction to the virtual image sensor through an I2C or SPI bus. After an image is processed by the ISP module of the processor chip, a graphics framework (surfaceflinger) module transmits the image to the image processing chip through a DSI hardware module of the processor chip by using a MIPI protocol. The image processing chip performs enhancement processing on the image, such as frame reduction and super-resolution. After the image processing chip performs enhancement processing on the image, the image is sent to a CSI RX1 module of the processor chip through a MIPI CSI TX0 of the image processing chip. After the processor chip receives the image processed by the image processing chip, the image only needs to be sent to a coding module for image coding or to a media (media) module for video coding, without a need for processing in the ISP module of the processor chip, and then is stored in a secure digital (Secure Digital Card, SD) card.

In this embodiment of this application, the image processing chip receives, through the second bus interface, the stream-on instruction sent by the processor chip; in response to the stream-on instruction, receives the first image data sent by the processor chip, and performs image processing on the first image data to obtain the second image data; and sends the second image data to the processor chip through the second camera serial interface. In this way, when the user takes a photograph or records a video, the image processing chip can send image data in the image processing chip to the processor chip through the second bus interface and the second camera serial interface. There is no need to add a new hardware interface to send the image data in the image processing chip to the processor chip, reducing difficulty in hardware design.

Optionally, after the second image data is sent to the processor chip through the second camera serial interface, the method further includes:
receiving, through the second bus interface, a stream-off instruction sent by the processor chip; and
in response to the stream-off instruction, stopping sending the second image data to the processor chip.

The processor chip may send the stream-off instruction to the image processing chip through the first bus interface in a case that a second instruction triggered by a second operation performed by the user is received. The second operation may be an operation of stopping photography or video recording. For example, the second operation may be an operation of canceling pressing the photography button by the user, or an operation of pressing a recording stop button.

In an implementation, after the user completes photography or video recording, the processor chip may deliver a stream-off instruction to the virtual image sensor through the I2C or SPI bus. If the image processing chip does not perform image processing currently, stream-off may be immediately performed on the TX0 interface. In this case, the electronic device switches to a preview mode of photography or a preview mode of video recording. If the user exits the camera, stream-off may be performed on a physical camera corresponding to the image sensor, power-off is performed on the physical camera and a virtual camera corresponding to the virtual image sensor, and requested ISP software and hardware resources are released.

In this implementation, the image processing chip receives, through the second bus interface, the stream-off instruction sent by the processor chip; and in response to the stream-off instruction, stops sending the second image data to the processor chip. In this way, the image processing chip can stop sending a stream to the processor chip when the user ends photography or video recording, to adapt a photography or video recording process of the camera.

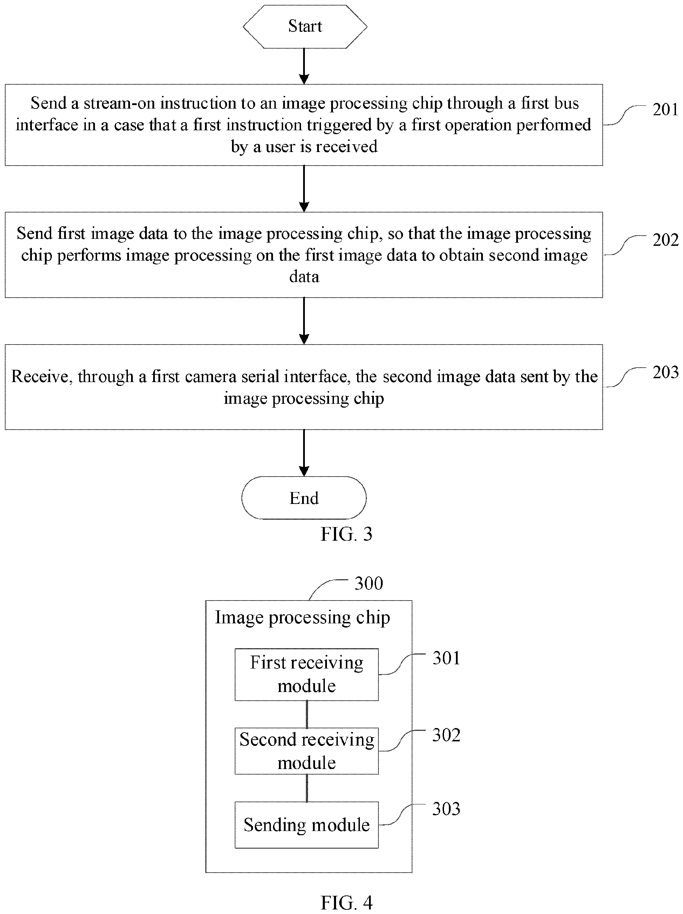

FIG. 3 is a flowchart 2 of a data transmission method according to an embodiment of this application. The method is performed by a processor chip, and the processor chip is the processor chip in the image processing circuit shown in FIG. 1. As shown in FIG. 3, the method includes the following steps:
Step 201: Send a stream-on instruction to the image processing chip through the first bus interface in a case that a first instruction triggered by a first operation performed by a user is received.
Step 202: Send first image data to the image processing chip, so that the image processing chip performs image processing on the first image data to obtain second image data.
Step 203: Receive, through the first camera serial interface, the second image data sent by the image processing chip.

In this embodiment of this application, the processor chip sends the stream-on instruction to the image processing chip through the first bus interface in a case that the first instruction triggered by the first operation performed by the user is received; sends the first image data to the image processing chip, so that the image processing chip performs image processing on the first image data to obtain the second image data; and receives, through the first camera serial interface, the second image data sent by the image processing chip. In this way, when the user takes a photograph or records a video, the image processing chip can send image data in the image processing chip to the processor chip through the second bus interface and the second camera serial interface. There is no need to add a new hardware interface to send the image data in the image processing chip to the processor chip, reducing difficulty in hardware design.

Optionally, after the second image data sent by the image processing chip is received through the first camera serial interface, the method further includes:
sending a stream-off instruction to the image processing chip through the first bus interface in a case that a second instruction triggered by a second operation performed by the user is received.

In this implementation, the processor chip sends the stream-off instruction to the image processing chip through the first bus interface in a case that the second instruction triggered by the second operation performed by the user is received. In this way, the image processing chip can stop sending a stream to the processor chip when the user ends photography or video recording, to adapt a photography or video recording process of a camera.

Optionally, before the first image data is sent to the image processing chip, the method further includes:
obtaining layer information based on an image signal output by the image sensor, where the layer information includes image layer sub-information and user interface UI layer sub-information; and
separating the image layer sub-information from the layer information.

The first image data is the image layer sub-information obtained through separation.

In an implementation, the layer information may form a camera preview interface. The processor chip may receive third image data sent by the image sensor; perform image signal processing on the third image data to obtain fourth image data; and generate a camera preview interface corresponding to the fourth image data. The fourth image data may generate image layer sub-information in layer information, the image layer sub-information may form an image displayed in the camera preview interface, and the image layer sub-information and UI layer sub-information jointly form the camera preview interface.

In this implementation, the processor chip obtains the layer information based on the image signal output by the image sensor, where the layer information includes the image layer sub-information and the user interface UI layer sub-information; and separates the image layer sub-information from the layer information. The first image data is the image layer sub-information obtained through separation. In this way, when the user takes a photograph or records a video, the processor chip can separate the image layer sub-information from the layer information, and send the image layer sub-information to the image processing chip for image processing, so that the user has good photography or video recording experience.

Optionally, after the second image data sent by the image processing chip is received through the first camera serial interface, the method further includes:
storing the second image data into the first storage module.

The processor chip can directly store, into the first storage module, image data received from the image processing chip through the first camera serial interface. The image data stored in the first storage module may be directly used for picture coding or video coding.

In this implementation, the second image data is stored into the first storage module, so that the processor chip can directly store, into the first storage module, image data sent by the image processing chip to the processor chip.

Optionally, before the stream-on instruction is sent to the image processing chip through the first bus interface, the method further includes:
initializing the image processing chip in a case that a third instruction triggered by a third operation performed by the user is received.

The third operation may be an operation of starting a camera. For example, the third operation may be an operation of starting a camera application by the user, or may be an operation of entering a camera preview interface by the user, or the like. Initializing the image processing chip may be initializing a register of the image processing chip. In a case that the third instruction triggered by the third operation performed by the user is received, a power-on operation may be performed on the image processing chip. After the power-on operation is completed, the image processing chip is initialized.

In an implementation, as shown in FIG. 1, the processor chip uses an I2C or SPI bus to control the image processing chip, and image data is transmitted through a MIPI DSI or a CSI. When a camera does not operate, the image processing chip is in a power-off state. When a camera application starts a camera to enter a photography or video recording mode, the image sensor and a virtual image sensor in the image processing chip are started, a physical camera corresponding to the image sensor and a virtual camera corresponding to the virtual image sensor are powered on at the same time, registers of the physical camera and the virtual camera are initialized through the I2C or SPI bus, and an ISP resource of the processor chip is initialized relatedly. After initialization, stream-on may be first performed on the physical camera, and the virtual camera is in a software standby (standby) state, that is, the image processing chip is in a standby state.

In this implementation, the image processing chip is initialized in a case that the third instruction triggered by the third operation performed by the user is received, so that the image processing chip can be initialized when the user starts a camera, to adapt a photography or video recording process of the camera.

It should be noted that, this embodiment is used as an embodiment corresponding to the processor chip in the embodiment shown in FIG. 2. For some specific implementations of this embodiment, refer to related descriptions of the embodiment shown in FIG. 2. To avoid repetition, details are not described in this embodiment again, and a same beneficial effect can be achieved.

A data transmission method provided in an embodiment of this application may be performed by an image processing chip. In this embodiment of this application, an example in which the image processing chip performs the data transmission method is used to describe the image processing chip provided in this embodiment of this application.

FIG. 4 is a schematic diagram of a structure of an image processing chip according to an embodiment of this application. As shown in FIG. 4, the image processing chip 300 includes:
a first receiving module 301, configured to receive, through a second bus interface, a stream-on instruction sent by a processor chip;
a second receiving module 302, configured to: in response to the stream-on instruction, receive first image data sent by the processor chip, and perform image processing on the first image data to obtain second image data; and
a sending module 303, configured to send the second image data to the processor chip through a second camera serial interface.

Optionally, the sending module 303 is further specifically configured to:
receive, through the second bus interface, a stream-off instruction sent by the processor chip; and
in response to the stream-off instruction, stop sending the second image data to the processor chip.

In this embodiment of this application, the first receiving module receives, through the second bus interface, the stream-on instruction sent by the processor chip. In response to the stream-on instruction, the second receiving module receives the first image data sent by the processor chip, and performs image processing on the first image data to obtain the second image data. The sending module sends the second image data to the processor chip through the second camera serial interface. In this way, the image processing chip separated from the processor chip is used to process image data, to reduce impact of a hardware limitation of the processor chip on an image processing capability, and improve an image data processing capability. In addition, the image processing chip and the processor chip transmit image data through the second camera serial interface and a first camera serial interface, and transmit control instructions through the second bus interface and a first bus interface. There is no need to add a new hardware interface to send image data in the image processing chip to the processor chip, reducing difficulty in hardware design.

It should be noted that, the image processing chip may be the image processing chip in the image processing circuit shown in FIG. 1. The image processing chip provided in this embodiment of this application can implement processes implemented in the method embodiment in FIG. 2. To avoid repetition, details are not described herein again.

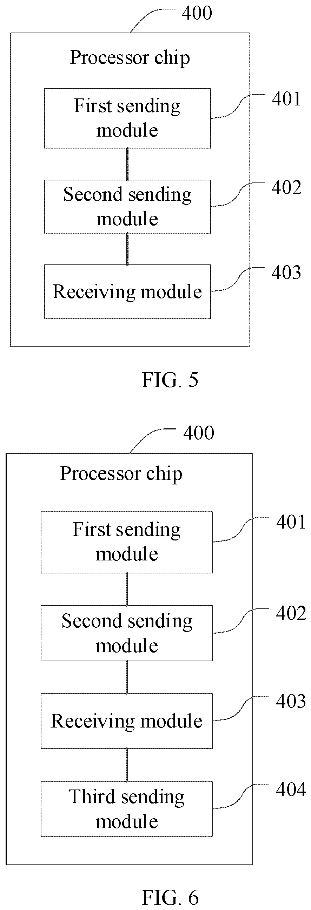

FIG. 5 is a schematic diagram of a structure of a processor chip according to an embodiment of this application. As shown in FIG. 5, the processor chip 400 includes:
a first sending module 401, configured to send a stream-on instruction to an image processing chip through a first bus interface in a case that a first instruction triggered by a first operation performed by a user is received;
a second sending module 402, configured to send first image data to the image processing chip, so that the image processing chip performs image processing on the first image data to obtain second image data; and
a receiving module 403, configured to receive, through a first camera serial interface, the second image data sent by the image processing chip.

Optionally, as shown in FIG. 6, the processor chip 400 further includes:
a third sending module 404, configured to send a stream-off instruction to the image processing chip through the first bus interface in a case that a second instruction triggered by a second operation performed by the user is received.

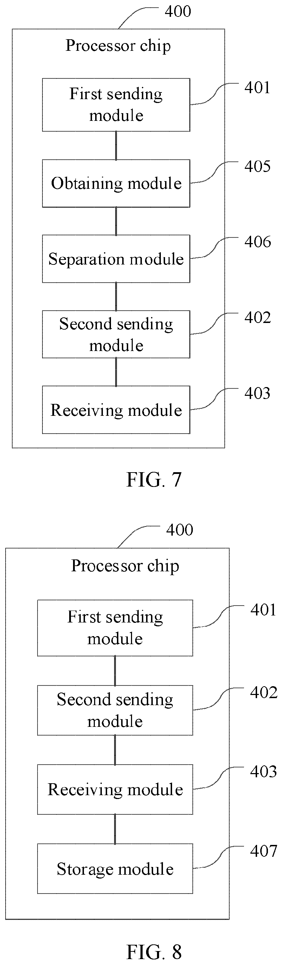

Optionally, as shown in FIG. 7, the processor chip 400 further includes:
an obtaining module 405, configured to obtain layer information based on an image signal output by an image sensor, where the layer information includes image layer sub-information and user interface UI layer sub-information; and
a separation module 406, configured to separate the image layer sub-information from the layer information.

The first image data is the image layer sub-information obtained through separation.

Optionally, as shown in FIG. 8, the processor chip 400 further includes:
a storage module 407, configured to store the second image data into a first storage module.

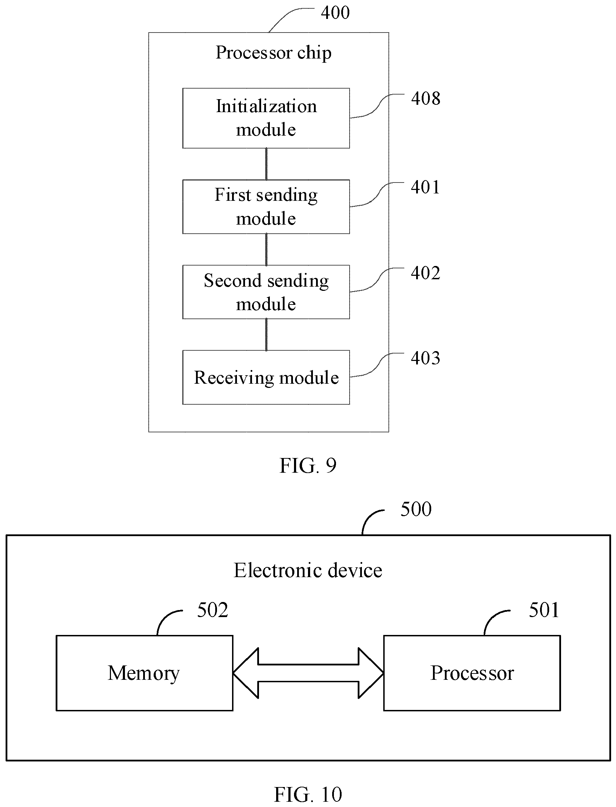

Optionally, as shown in FIG. 9, the processor chip 400 further includes:
an initialization module 408, configured to initialize the image processing chip in a case that a third instruction triggered by a third operation performed by the user is received.

In this embodiment of this application, the first sending module sends the stream-on instruction to the image processing chip through the first bus interface in a case that the first instruction triggered by the first operation performed by the user is received. The second sending module sends the first image data to the image processing chip, so that the image processing chip performs image processing on the first image data to obtain the second image data. The receiving module receives, through the first camera serial interface, the second image data sent by the image processing chip. In this way, when the user takes a photograph or records a video, the image processing chip can send image data in the image processing chip to the processor chip through a second bus interface and a second camera serial interface. There is no need to add a new hardware interface to send the image data in the image processing chip to the processor chip, reducing difficulty in hardware design.

It should be noted that, the processor chip may be the processor chip in the image processing circuit shown in FIG. 1. The processor chip provided in this embodiment of this application can implement processes implemented in the method embodiment in FIG. 3. To avoid repetition, details are not described herein again.

Optionally, as shown in FIG. 10, an embodiment of this application further provides an electronic device 500, including a processor 501 and a memory 502. The memory 502 stores a program or instructions capable of running on the processor 501. When the program or the instructions are executed by the processor 501, the steps of the foregoing data transmission method embodiment are implemented, and a same technical effect can be achieved. To avoid repetition, details are not described herein again.

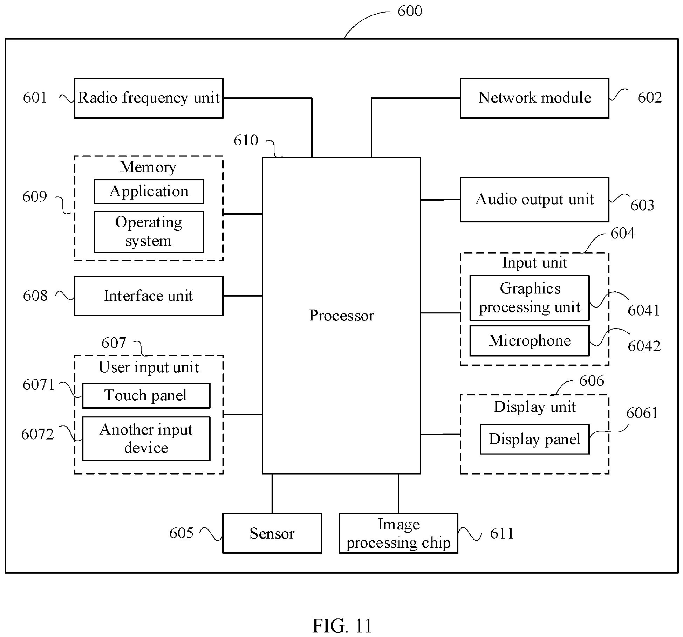

FIG. 11 is a schematic diagram of a hardware structure of an electronic device according to an embodiment of this application.

The electronic device 600 includes but is not limited to components such as a radio frequency unit 601, a network module 602, an audio output unit 603, an input unit 604, a sensor 605, a display unit 606, a user input unit 607, an interface unit 608, a memory 609, a processor 610, and an image processing chip 611.

A person skilled in the art can understand that the electronic device 600 may further include a power supply (such as a battery) that supplies power to each component. The power supply may be logically connected to the processor 610 by using a power supply management system, to implement functions such as charging and discharging management, and power consumption management by using the power supply management system. The structure of the electronic device shown in FIG. 11 constitutes no limitation on the electronic device. The electronic device may include components more or fewer than those shown in the figure, or combine some components, or have different component arrangements. Details are not described herein again.

The sensor 605 includes an image sensor, and the processor 610 is a processor chip. The processor chip is communicatively connected to the image sensor, and the processor chip includes a first camera serial interface and a first bus interface.

The image processing chip 611 includes a second camera serial interface and a second bus interface, the second camera serial interface is connected to the first camera serial interface, and the second bus interface is connected to the first bus interface.

The image processing chip and the processor chip transmit image data through the second camera serial interface and the first camera serial interface, and transmit control instructions through the second bus interface and the first bus interface.

The image processing chip 611 is configured to:
receive, through the second bus interface, a stream-on instruction sent by the processor chip;
in response to the stream-on instruction, receive first image data sent by the processor chip, and perform image processing on the first image data to obtain second image data; and
send the second image data to the processor chip through the second camera serial interface.

Optionally, the image processing chip 611 is further configured to:
receive, through the second bus interface, a stream-off instruction sent by the processor chip; and
in response to the stream-off instruction, stop sending the second image data to the processor chip.

The processor 610 is configured to:
send a stream-on instruction to the image processing chip through the first bus interface in a case that a first instruction triggered by a first operation performed by a user is received;
send first image data to the image processing chip, so that the image processing chip performs image processing on the first image data to obtain second image data; and
receive, through the first camera serial interface, the second image data sent by the image processing chip.

Optionally, the processor 610 is further configured to:
send a stream-off instruction to the image processing chip through the first bus interface in a case that a second instruction triggered by a second operation performed by the user is received.

Optionally, the processor 610 is further configured to:
obtain layer information based on an image signal output by the image sensor, where the layer information includes image layer sub-information and user interface UI layer sub-information; and
separate the image layer sub-information from the layer information.

The first image data is the image layer sub-information obtained through separation.

Optionally, the processor 610 is further configured to:
store the second image data into a first storage module.

Optionally, the processor 610 is further configured to:
initialize the image processing chip in a case that a third instruction triggered by a third operation performed by the user is received.

It should be understood that in this embodiment of this application, the input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in a video capture mode or an image capture mode. The display unit 606 may include a display panel 6061. Optionally, the display panel 6061 may be configured in a form such as a liquid crystal display or an organic light-emitting diode. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power-on/off button), a trackball, a mouse, and a joystick. Details are not described herein.

The memory 609 may be configured to store a software program and various data, including but not limited to an application and an operating system. The memory 609 may mainly include a first storage area for storing a program or an instruction and a second storage area for storing data. The first storage area may store an operating system, and an application or an instruction required by at least one function (for example, a sound playing function or an image playing function). In addition, the memory 609 may be a volatile memory or a nonvolatile memory, or the memory 609 may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 609 in this embodiment of this application includes but is not limited to these memories and any memory of another proper type.

The processor 610 may include one or more processing units. Optionally, an application processor and a modem processor may be integrated into the processor 610. The application processor mainly processes an operating system, a user interface, an application, and the like. The modem processor mainly processes a wireless communication signal, for example, a baseband processor. It may be understood that, the modem processor may alternatively not be integrated into the processor 610.

An embodiment of this application further provides a readable storage medium. The readable storage medium stores a program or instructions. When the program or the instructions are executed by a processor, the processes of the foregoing data transmission method embodiment are implemented, and a same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement the processes of the foregoing data transmission method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application provides a computer program product. The program product is stored in a storage medium. The program product is executed by at least one processor to implement the processes of the foregoing data transmission method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element defined by "includes a..." does not preclude the existence of other identical elements in the process, method, article, or apparatus that includes the element. In addition, it should be noted that, the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or a part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the method described in embodiments of this application.

Embodiments of this application are described above with reference to the accompanying drawings, but this application is not limited to the foregoing specific implementations, and the specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An image processing circuit, wherein the image processing circuit comprises:
an image sensor;
a processor chip, wherein the processor chip is communicatively connected to the image sensor, and the processor chip comprises a first camera serial interface and a first bus interface; and
an image processing chip, wherein the image processing chip comprises a second camera serial interface and a second bus interface, the second camera serial interface is connected to the first camera serial interface, and the second bus interface is connected to the first bus interface, wherein
the image processing chip and the processor chip transmit image data through the second camera serial interface and the first camera serial interface, and transmit control instructions through the second bus interface and the first bus interface.

2. The image processing circuit according to claim 1, wherein the processor chip further comprises a first display serial interface, the image processing chip comprises a second display serial interface, and the second display serial interface is connected to the first display serial interface.

3. The image processing circuit according to claim 2, wherein the processor chip further comprises an image signal processing module and a display synthesis service module, one end of the display synthesis service module is communicatively connected to the image sensor through the image signal processing module, and the other end of the display synthesis service module is connected to the first display serial interface.

4. The image processing circuit according to claim 1, wherein the processor chip further comprises a first storage module, and the first camera serial interface is communicatively connected to the first storage module.

5. An electronic device, comprising the image processing circuit according to any one of claims 1 to 4.

6. A data transmission method, performed by an image processing chip, wherein the image processing chip is the image processing chip in the image processing circuit according to any one of claims 1 to 4, and the method comprises:
receiving, through the second bus interface, a stream-on instruction sent by the processor chip;
in response to the stream-on instruction, receiving first image data sent by the processor chip, and performing image processing on the first image data to obtain second image data; and
sending the second image data to the processor chip through the second camera serial interface.

7. The method according to claim 6, wherein after the sending the second image data to the processor chip through the second camera serial interface, the method further comprises:
receiving, through the second bus interface, a stream-off instruction sent by the processor chip; and
in response to the stream-off instruction, stopping sending the second image data to the processor chip.

8. A data transmission method, performed by a processor chip, wherein the processor chip is the processor chip in the image processing circuit according to any one of claims 1 to 4, and the method comprises:
sending a stream-on instruction to the image processing chip through the first bus interface in a case that a first instruction triggered by a first operation performed by a user is received;
sending first image data to the image processing chip, so that the image processing chip performs image processing on the first image data to obtain second image data; and
receiving, through the first camera serial interface, the second image data sent by the image processing chip.

9. The method according to claim 8, wherein after the receiving, through the first camera serial interface, the second image data sent by the image processing chip, the method further comprises:
sending a stream-off instruction to the image processing chip through the first bus interface in a case that a second instruction triggered by a second operation performed by the user is received.

10. The method according to claim 8, wherein before the sending first image data to the image processing chip, the method further comprises:
obtaining layer information based on an image signal output by the image sensor, wherein the layer information comprises image layer sub-information and user interface UI layer sub-information; and
separating the image layer sub-information from the layer information, wherein
the first image data is the image layer sub-information obtained through separation.

11. The method according to claim 8, wherein after the receiving, through the first camera serial interface, the second image data sent by the image processing chip, the method further comprises:
storing the second image data into the first storage module.

12. The method according to claim 8, wherein before the sending a stream-on instruction to the image processing chip through the first bus interface, the method further comprises:
initializing the image processing chip in a case that a third instruction triggered by a third operation performed by the user is received.

13. An image processing chip, wherein the image processing chip comprises:
a first receiving module, configured to receive, through a second bus interface, a stream-on instruction sent by a processor chip;
a second receiving module, configured to: in response to the stream-on instruction, receive first image data sent by the processor chip, and perform image processing on the first image data to obtain second image data; and
a sending module, configured to send the second image data to the processor chip through a second camera serial interface.

14. The image processing chip according to claim 13, wherein the sending module is further specifically configured to:
receive, through the second bus interface, a stream-off instruction sent by the processor chip; and
in response to the stream-off instruction, stop sending the second image data to the processor chip.

15. A processor chip, wherein the processor chip comprises:
a first sending module, configured to send a stream-on instruction to an image processing chip through a first bus interface in a case that a first instruction triggered by a first operation performed by a user is received;
a second sending module, configured to send first image data to the image processing chip, so that the image processing chip performs image processing on the first image data to obtain second image data; and
a receiving module, configured to receive, through a first camera serial interface, the second image data sent by the image processing chip.

16. The processor chip according to claim 15, wherein the processor chip further comprises:
a third sending module, configured to send a stream-off instruction to the image processing chip through the first bus interface in a case that a second instruction triggered by a second operation performed by the user is received.

17. The processor chip according to claim 15, wherein the processor chip further comprises:
an obtaining module, configured to obtain layer information based on an image signal output by an image sensor, wherein the layer information comprises image layer sub-information and user interface UI layer sub-information; and
a separation module, configured to separate the image layer sub-information from the layer information, wherein
the first image data is the image layer sub-information obtained through separation.

18. The processor chip according to claim 15, wherein the processor chip further comprises:
a storage module, configured to store the second image data into a first storage module.

19. The processor chip according to claim 15, wherein the processor chip further comprises:
an initialization module, configured to initialize the image processing chip in a case that a third instruction triggered by a third operation performed by the user is received.

20. An electronic device, comprising a processor and a memory, wherein the memory stores a program or instructions capable of running on the processor, and when the program or the instructions are executed by the processor, the steps of the data transmission method according to any one of claims 6 and 7 are implemented, or when the program or the instructions are executed by the processor, the steps of the data transmission method according to any one of claims 8 to 12 are implemented.

21. A readable storage medium, wherein the readable storage medium stores a program or instructions, and when the program or the instructions are executed by a processor, the steps of the data transmission method according to any one of claims 6 and 7 are implemented, or when the program or the instructions are executed by a processor, the steps of the data transmission method according to any one of claims 8 to 12 are implemented.

22. A chip, comprising a processor and a communication interface, wherein the communication interface is coupled to the processor, and the processor is configured to run a program or instructions, to implement the steps of the data transmission method according to any one of claims 6 and 7 or the steps of the data transmission method according to any one of claims 8 to 12.

23. A computer program product, wherein the computer program product is stored in a storage medium, and the computer program product is executed by at least one processor, to implement the steps of the data transmission method according to any one of claims 6 and 7 or the steps of the data transmission method according to any one of claims 8 to 12.

24. An electronic device, configured to perform the steps of the data transmission method according to any one of claims 6 and 7 or the steps of the data transmission method according to any one of claims 8 to 12.
